# NEUE EUROPÄISCHE PATENTSCHRIFT

(11) **EP 2 593 299 B2**
(45) Veröffentlichungstag und Bekanntmachung des Hinweises auf die Entscheidung über den Einspruch: **30.01.2019**
(45) Hinweis auf die Patenterteilung: 21.10.2015
(21) Anmeldenummer: 11729902.4
(22) Anmeldetag: 07.06.2011
(51) Int. Cl.: B32B 9/02, B62D 1/04, B62D 1/06, B25B 11/00, B25B 5/14

(54) **LENKRAD MIT ÜBERZUG UND VERFAHREN ZU DESSEN HERSTELLUNG**
STEERING WHEEL HAVING A COVER AND METHOD FOR THE PRODUCTION THEREOF
VOLANT MUNI D'UN REVETEMENT ET PROCEDE DE FABRICATION ASSOCIE

(30) Priorität: 14.07.2010 DE 102010027157
(43) Veröffentlichungstag der Anmeldung: 22.05.2013
(73) Patentinhaber: TRW Automotive Safety Systems GmbH, 63743 Aschaffenburg (DE); Tecmove GmbH, 89343 Jettingen-Scheppach (DE)
(72) Erfinder: ADELBERGER, Maik, 63762 Grossostheim (DE); BIEBER, Heiko, 63856 Bessenbach (DE); KNEITINGER, Peter, 63762 Grossostheim (DE); SCHULTE, Ulrich, 50996 Köln (DE); LEDERER, Bernd, A-8071 Hausmannstätten (AT)
(74) Vertreter: ZF TRW Patentabteilung
(86) Internationale Anmeldenummer: PCT/EP2011/002778
(87) Internationale Veröffentlichungsnummer: WO 2012/007083

(56) Entgegenhaltungen:
- EP-A1- 0 507 748
- WO-A2-2004/065639
- DE-A1- 10 036 069
- DE-A1- 10 059 133
- DE-A1- 19 654 246
- DE-A1- 19 911 815
- DE-A1-102006 004 145
- DE-A1-102007 057 637
- DE-C1- 4 134 951
- DE-C1- 10 001 210
- DE-U1-202009 015 059
- US-A- 4 581 954
- US-A1- 2003 162 454
- US-A1- 2004 076 816
- DATABASE WPI Week 201028 Thomson Scientific, London, GB; AN 2010-E09034 XP002653707, & JP 2010 082956 A (TOYODA GOSEI CO LTD) 15. April 2010 (2010-04-15)
- 'HÜTTE, DES INGENIEURS TASCHENBUCH', Bd. BAND I, 1931, VERLAG VON WILHELM ERNST & SOHN, BERLIN Seiten 938 - 939

## Beschreibung

Die Erfindung betrifft ein Verfahren zur Herstellung eines Lenkrads mit einem Überzug. Die Erfindung betrifft ferner ein Lenkrad mit einem Lenkradgrundkörper und einem darauf aufgebrachten Überzug.

Ein solches Verfahren ist aus US 2004/076816 gemäß dem Oberbegriff des Anspruchs 1 bekannt.

Den steigenden Ansprüchen an Präzision in der Verarbeitung, Anmut des Verbaus und Effizienz im Umgang mit der Ressource Leder werden die derzeit bekannten chemischen und physikalischen Möglichkeiten der Lederherstellung nicht mehr gerecht. Aus Mangelt an technischen Möglichkeiten der Lederindustrie werden zunehmend Kompromisse in der Verarbeitung in Verbindung mit einer sinkende Effizienz eingegangen.

Nachfolgend werden die Probleme der Ressource Leder im Hinblick auf deren Verwendung als Überzug, insbesondere für Lenkräder in Kraftfahrzeugen, kurz beleuchtet.

Der histologische Aufbau einer Rinderhaut verhindert eine einheitliche, reversible Dehnung des Leders. Das durchschnittliche Dehnverhalten (längs/quer) einer Lederhaut variiert von 4 - 25 %. Ohne verschnitteinschränkende Parameter, wie Naturmerkmale, in Betracht zu ziehen, hat nur etwa die Hälfte der Lederhaut ein gleichbleibendes Dehnverhalten, welches auch den Ansprüchen bestimmter Spezifikationen entspricht. Je nach Ledertyp muss ein Anteil von 35 - 60 % der hochwertigen Lederhaut entsorgt werden, da er den Anforderungen nicht entspricht.

Bezüglich der Lederrückseite, für die es derzeit noch keine Spezifikation gibt, beeinflussen unterschiedliche Faserlängen und Staub den Verbau negativ. Fasern der Lederrückseite lösen sich und bilden Knöllchen/Klumpen (Fremdkörper), die sich unschön an der Narbenseite abbilden. Seitens der Ledererzeugung kann nur mit zeitaufwendigen und kostspieligen Behandlungen der Rückseite, wie Schleifen, Beschichtungen und Auftrag von Lackierungen (Staubbinder) reagiert werden. Staubbinder und Lackaufträge erhöhen den sogenannten Fogging-Wert erheblich.

Aufgrund des hohen spezifischen Gewichts von Leder wird versucht, eine Gewichtsreduzierung durch Verminderung der Stärke zu erreichen. Dadurch verschlechtern sich jedoch die Parameter der physikalischen Eigenschaften (Weiterreißkraft, Stichausreißkräfte, Bruchdehnung, etc.) deutlich unter die Vorgaben der Spezifikationen.

Den sehr hohen Anforderungen bezüglich Wärmelagerungen und Klimawechseltests werden mit dem Naturprodukt Leder überzogene Lenkräder selten gerecht. Seitens der Ledertechnik kann nur aufwendig und mit einem Mehrpreis unter Einsatz von schrumpfoptimiertem Leder reagiert werden. Schrumpfoptimiertes Leder lässt sich aber schwieriger verbauen, und extreme Konturen, wie sie bei zu umledernden Lenkrädern mit Speichen vorzufinden sind, können gar nicht darstellt werden.

Umlederte Lenkräder müssen ggf. unter Einsatz von Temperatur in Form gebracht werden. Das Leder wird dadurch beschädigt, die Temperaturresistenz ist gering.

Durch langfasrige Bereiche der Lederhaut wird die Haftung von Leder am Lenkrad negativ beeinflusst.

Die physikalischen Anforderungen bestimmter Spezifikationen können nur im Kernbereich der Lederhaut erreicht werden.

Allgemein ist selbst unter Betracht der "idealen" Dehnung der Lederhart von 8 - 18 % eine präzise Positionierung der umlederten Gegenstände zueinander nicht gegeben. In der Produktion von Interieur-Applikationen kommt es zwangsläufig zu einer Vermischung der Lederzuschnitte aus unterschiedlichen Entnahmebereichen, wobei davon auszugehen ist, dass die Ausbringung aus der gesamten Lederhaut erfolgt. Im Verbund der Applikation bzw. der Umlederung treffen somit Gegenstände mit extrem unterschiedlichen Dehnungen aufeinander. Die Passgenauigkeit der Lederzuschnitte im vernähten Verbund kann per se nur Zufall sein - den Toleranzen der Lederdehnung kann in der Erstellung der Kontur nur annähernd begegnet werden. Falten im Verbau sind bei Übergängen von konvexen zu konkaven Bereichen eine weitere Auswirkung dieser Situation.

Aufgrund von unterschiedlichen Produktionstechniken und unterschiedlichen Rohhautprovenienzen ist die Erstellung von "Unisono"-Schablonen für alle Leder-arten und Lieferanten nicht möglich. Zuschnittschablonen werden in, der Konstruktion basierend auf eine "Masterlederhaut" erstellt. Aufwendig wird dabei versucht, die unterschiedlichen Dehnungen der Lederhaut für die Serienlieferung zu berücksichtigen. Unterschieden von Lederhaut zu Lederhaut bzw. anderen Einflüssen kann hier keine Rechnung getragen werden. Bis zur Serientauglichkeit von Zuschnitten müssen deshalb zahlreiche Schleifen zur Optimierung des Zuschnittes gefahren werden.

Natürliches Leder ist nach einer Dehnung nicht in der Lage, seine ursprüngliche Form wieder einzunehmen. Daher kommt beanspruchtes Leder mit Fortschritt der Beanspruchung immer mehr aus der Form. Folge ist die fortschreitende Überdehnung. Mit der Intensität der Beanspruchung schreitet dieser Prozess schneller voran und kann bis zu Rissen und Brüchen führen.

Aufgrund der unterschiedlichen Dehnung von Leder (längs/quer) ist es notwendig, einem Stanzplan zu folgen und die Zuschnitte gerichtet aus der Lederhaut zu entnehmen (z.B. Stanzrichtung: Bauch-Bauch).

Die unterschiedliche Dehnung ist auch der Grund dafür, dass jeder Gegenstand trotz bester Konstruktion und Konturerstellung eine große Herausforderung an den Mitarbeiter der Serienproduktion darstellt. Der Mitarbeiter erarbeitet sich Fertigkeiten, mit den unterschiedlichen Gegebenheiten umzugehen, ist dabei aber nur bedingt produktiv.

Aufgabe der Erfindung ist es, ein Lenkrad mit einem qualitativ hochwertigen Überzug zu schaffen, der die oben genannten Nachteile vermeidet, und sich Insbesondere effektiv und formschön auf den Lenkradgrundkörper aufbringen lässt.

Gelöst wird diese Aufgabe durch ein Verfahren zur Herstellung eines Lenkrads mit den Merkmalen des Anspruchs 1 bzw. durch ein Lenkrad mit den Merkmalen des Anspruchs 5. Vorteilhafte und zweckmäßige Ausgestaltungen des erfindungsgemäßen Verfahrens bzw. des erfindungsgemäßen Lenkrads sind in den zugehörigen Unteransprüchen angegeben.

Das erfindungsgemäße Verfahren zur Herstellung eines tenkrads mit einem Überzug umfasst folgende Schritte:
- Bereitstellen eines Lederzuschnitts mit einer Vorderseite und einer Rückseite;
- Bereitstellen eines heißsiegelfähigen Schichtverbunds;
- Kaschieren des heißsiegelfähigen Schichtverbunds auf die Rückseite des Lederzuschnitts; und
- Aufbringen des Überzugs auf einen Lenkradgrundkörper.

Das erfindungsgemäße Lenkrad, das insbesondere für ein Kraftfahrzeug vorgesehen ist, umfasst einen Lenkradgrundkörper und einen darauf aufgebrachten Überzug. Der Überzug umfasst einen Lederzuschnitt mit einer Vorderseite und einer Rückseite und einen auf die Rückseite des Lederzuschnitts kaschierten heißsiegelfähigen Schichtverbund.

Der heißsiegelfähige Schichtverbund weist eine biaxial dehnbare Schicht oder einen Schichtverbund mit einer biaxial dehnbaren Schicht auf.

Gemäß der Erfindung ist die biaxial dehnbare Schicht aus einer biaxial dehnbaren Webware gebildet. Diese besteht vorzugsweise aus 100 % Polyester und weist weiter vorzugsweise ein Gewicht von 20 bis 26g/m², insbesondere von ca. 23 g/m² auf.

Mithilfe des erfindungsgemäß auf die Lederrückseite aufgebrachten heißsiegelfähigen Schichtverbunds lassen sich bezogen auf das Lenkrad folgende Vorteile erzielen:
Die extrem unterschiedliche Dehnung der Lederhaut (4 - 25 %) kann auf einen längs und quer einheitlichen, deutlich verringerten Wert, vorzugsweise einen Wert von 9-11 %, reguliert werden. Speziell bei hochdehnfähigen Lederhäuten resultiert eine deutliche Verringerung der statischen und bleibenden Dehnung. Der Ledercharakter bleibtdabei mit Bezug auf Haptik, Griff, Glanz, Farbe, Weichheit und Fülle erhalten.

Bereiche der Lederhaut mit hoher bzw. extremer Dehnung können überhaupt erst durch die Ausrüstung mit dem heißsiegelfähigen Schichtverbund genutzt werden. Generell wird die Ausbringung erheblich erhöht, da neben der höheren nutzbaren Fläche auch der Ausschuss von Stanzlingen auf Grund von zu geringer und/oder zu hoher Dehnung gegen Null geht.

Durch den Einsatz des heißsiegelfähigen Schichtverbunds ist eine einwandfreie glatte und saubere Lederrückseite gewährleistet.

Der erfindungsgemäß vorgesehene Überzug mit dem heißsiegelfähigen Schichtverbund ermöglicht eine deutliche Gewichtsersparnis, von bis zu 10 %, in gängigen Fällen von durchschnittlich 5%, mit Verbundeigenschaften, die die Spezifikationen bezüglich Weiterreißkräften, Stichausreißkräften, Bruchdehnung, etc. bei weitem übertreffen.

Auch der Schrumpf an einem mit dem heißsiegelfähigen Schichtverbund ausgerüsteten Leder wird deutlich reduziert. Dies wird durch eine bessere Haftung des erfindungsgemäß kaschierten Leders am Lenkradgrundkörper und durch die regulierenden Eigenschaften des heißsiegelfähigen Schichtverbunds erziett. Bei vergleichbaren Kosten relativ zu schrumpfoptimiertem Leder kommen die weiteren Vorteile der Erfindung noch hinzu.

Das erfindungsgemäße Lenkrad zeichnet sich durch deutlich erhöhte Resistenz gegen Wärme und Hitzeeinwirkung aus. Versuche zeigen deutlich verbesserte Produkteigenschaften und reduzierten Ausschuss aufgrund der erhöhten thermischen Belastbarkeit

Da ein erfindungsgemäß kaschiertes Leder ca. 6 % mehr Kleber aufnimmt als Leder mit einer unbeschichteten Rückseite, erhöht sich die Haftung des Überzugs am Lenkradgrundkörper deutlich, und die Anforderungen werden klar übertroffen. Die gleichmäßige Rückseite des Überzugs führt zu gleichmäßig guter Haftung, unabhängig von der Beschaffenheit der Rückseite des Leders.

Hinsichtlich der physikalischen Eigenschaften können Spezifikationen des erfindungsgemäß vorgesehenen Überzugs verbauoptimierend deutlich erhöht werden, aktuelle Spezifikationen werden deutlich übertroffen. Insgesamt verfügt die Kombination von Leder mit dem heißsiegelfähigen Schichtverbund über gänzlich neue Eigenschaften und überwindet die technischen Einschränkungen von Leder. Es werden neue Möglichkeiten im Design und der Formgebung von Lederlenkrädern eröffnet.

Im Hinblick auf die Präzision bringt die mit der Erfindung einhergehende Regulierung der Dehnung des Überzugs eine Reihe von Vorzügen. Die Passform des Lederkleides ist präzise, es treten keine Verzüge der Zuschnitte auf. Das Nahtbild wird durch die Egalisierung der Dehnung sichtbar präziser.

Aufgrund der regulierten Dehnungseigenschaften können unisono unterschiedliche Leder von verschiedenen Lieferanten mit einer vorbestimmten Kontur verwendet werden. Da die Zuschnittserstellung nur einmal erfolgen muss, werden hier enorme Kosten und Ressourcen gespart.

Erfindungsgemäß ausgerüstetes Leder verlängert sichtbar die Formstabilität des überzogenen Lenkrads. Großversuche haben gezeigt, dass bei erfindungsgemäß ausgestattetem Leder die Stanzrichtung unerheblich ist. Stanzlinge aus unterschiedlichen Bereichen und Entnahmen konnten einwandfrei und ohne Beeinträchtigung miteinander verbaut werden.

Die mit der Erfindung erreichte Vereinheitlichung der Dehnung des überzogenen Lenkrads steigert die Produktivität in der Fertigung deutlich. Neben der Produktivität wird dadurch auch die Motivation der Mitarbeiter gesteigert, was letztendlich in einer deutlich präziseren Planung der Produktionskapazitäten mündet.

Durch die erfindungsgemäß vorgesehene schonende Veredelung des natürlichen Leders bleiben dessen natürlicher Charakter und die wertige Anmut erhalten.

Im Hinblick auf die Kostenoptimierung bei der Lenkradherstellung ermöglicht die Erfindung aufgrund der durch den heißsiegelfähigen Schichtverbund verbesserten Eigenschaften den Einsatz von günstigeren Ledersortimenten.

Gemäß einer weiteren bevorzugten Ausführungsform ist das erfindungsgemäße Lenkrad der zuvor genannten Art so ausgebildet, dass das Lenkrad einen metallenen Kern aufweist, der zumindest teilweise von einem Schaummaterial umgeben ist, wobei vorzugsweise zwischen dem Schaummaterial und dem Überzug eine Heiz- oder Kühl Einrichtung angeordnet ist, und/ oder ein relativ zum Kern bewegliches Bauteil, insbesondere ein Airbagmodul an dem Kern und/ oder dem Schaummaterial befestigbar bzw. befestigt ist.

Weitere Merkmale und Vorteile der Erfindung ergeben sich aus der nachfolgenden Beschreibung und aus den beigefügten Zeichnungen, auf die Bezug genommen wird. In den Zeichnungen zeigen jeweils schematisch:
- Figur 1 Eine Gesamtansicht eines erfindungsgemäßen Lederlenkrades;
- Figur 2 die Herstellung eines heißsiegelfähigen Schichtverbunds nach einer ersten Ausführungsform des erfindungsgemäßen Verfahrens;
- Figur 3 das Kaschieren des heißsiegelfähigen Schichtverbunds aus Figur 2 auf einen Lederzuschnitt;
- Figur 4 die Herstellung eines Schichtverbunds mit einer biaxial dehnbaren Schicht nach einer zweiten Ausführungsform des erfindungsgemäßen Verfahrens;
- Figur 5 die Herstellung eines heißsiegelfähigen Schichtverbunds mit dem Schichtverbund aus Figur 4; und
- Figur 6 das Kaschieren des heißsiegelfähigen Schichtverbunds aus Figur 5 auf einen Lederzuschnitt.

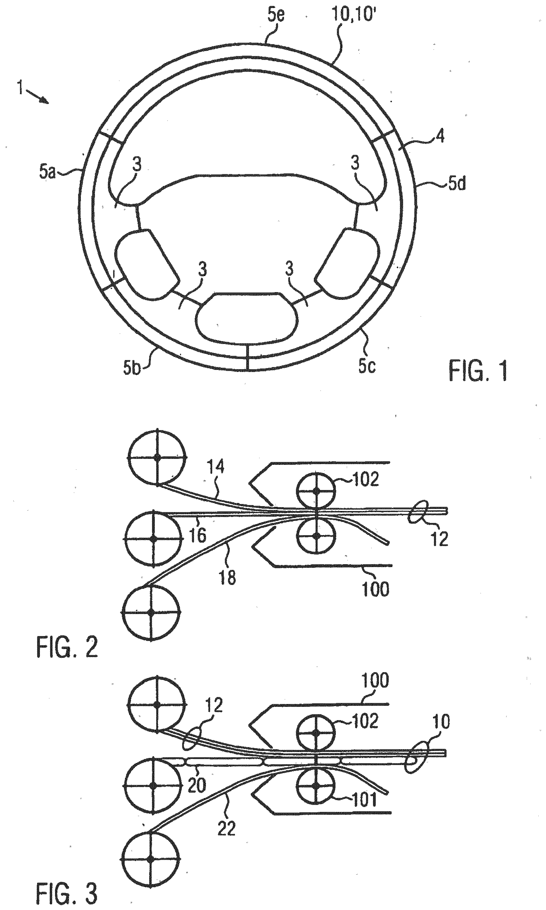

In Figur 1 ist ein erfindungsgemäßes Lenkrad 1 mit einem Überzug 10, 10' entsprechend einer bevorzugten Ausführungsform dargestellt. Das Lenkrad 1 weist einen Lenkradkranz 4 auf, der über eine oder mehrere Speichen 3 gehalten wird. In der Mitte des Lenkrades, der Nabe 2, ein Modul, insbesondere ein Airbagmodul 2' angeordnet. Lenkradkranz 4 und Nabe 2 können über die Speichen 3 miteinander verbunden oder als relativ zu einander bewegliche (drehbare) Komponenten ausgebildet sein. Der Lenkradkranz 4 kann mehrere Bereiche 5a - 5e aufweisen, die von einander abgegrenzt oder aneinander angrenzend ausgebildet sein können.

Erfindungsgemäß können einzelne oder mehrere oder alle Bereiche des Lenkradkranzes mit dem Überzug 10, 10' versehen sein. Denkbar ist insbesondere, die Bereiche 5a und 5d bzw. die Bereiche 5b, 5c und 5e mit einem Überzug 10 oder 10', auch abwechselnd, zu versehen. Die Nabe 2, bzw. das Modul 2' kann hierbei, ebenso wie die Speichen 3 hierbei gesondert mit einem Überzug 10, 10' oder zusammenhängend mit den angrenzenden Bereichen des Lenkradkranzes 4 (oder der Nabe) versehen sein.

Auch ist denkbar, die Speichen 3 bzw. die Nabe 2 und/ oder Teile des Lenkradkranzes 4 frei von einem Überzug 10, 10' auszubilden. In diesen Bereichen ist es denkbar, eine auf ein Skelett des Lenkrades 1 aufgebrachte Umschäumung, den Lenkradgrundkörper, frei sichtbar zu belassen, oder diese Bereiche anders, z.B. mit einer Holzschale zu überdecken.

Im Folgenden wird anhand von Figur 2 und 3 eine erfindungsgemäßes Verfahrens zur Herstellung eines Lenkrads mit einem Überzug 10 gemäß einer ersten Ausführungsform beschrieben.

Anhand der Darstellung in Figur 2 wird ein erster Schritt erläutert. Mithilfe einer Kaschieranlage wird zunächst ein heißsiegelfähiger (thermisch aktivierbarer) Schichtverbund 12 hergestellt, der eine biaxial dehnbare Schicht 14 aufweist. Die biaxial dehnbare Schicht 14 besteht bevorzugt aus einer biaxial dehnbaren Webware aus 100 % Polyester in Kette und Schuss mit einem Gewicht von 20-25 g/m², vorzugsweise 22-24g/m², insbesondere ca. 23 g/m².

Zur Herstellung des heißsiegelfähigen Schichtverbunds 12 wird eine thermisch aktivierbare Klebeschicht 16 mit einer ersten Seite auf die biaxial dehnbare Schicht 14 kaschiert. Die Klebeschicht 16 ist vorzugsweise ein als Bahnware verfügbares Co-Polyesterklebeweb. Bei diesem Vorgang wird auf einer der ersten Seite entgegengesetzten zweiten Seite der Klebeschicht 16 ein erstes Trennmittel 18, insbesondere ein Silikonpapier, eingesetzt.

In einem darauf folgenden Schritt, der in Figur 3 dargestellt ist, wird der heißsiegelfähige Schichtverbund 12 auf die Rückseite eines Lederzuschnitts 20 kaschiert. Auf der Vorderseite (Sichtseite) des Lederzuschnitts 20 wird dabei ein zweites Trennmittel 22, insbesondere ein nicht gewebtes Material, z.B. Silikonpapier, eingesetzt.

Wünschenswert ist bei diesem Vorgang, dass die der Ledervorderseite zugewandte Seite der Kaschieranlage 100 mit möglichst niedriger Temperatur (max. 70° C) gefahren wird, wobei die benötigte Temperatur zum Aufschmelzen der Klebeschicht 16 über die Rückseite (Textil- bzw. Fleischseite) des Leders erzielt wird. Der notwendige Druck wird nicht als Linien- (Walzen-) Druck zwischen zwei Druckwalzen 102 aufgebracht, da er möglichst großflächig aufgebracht werden soll. Dies erreicht man vorzugsweise mit einer sogenannten Flexowalze 101, die bei geringstem Druck eine flächige Anpressung ermöglicht (ähnlich einem Reifen, der zu wenig aufgepumpt ist).

Durch die Kaschierung mit dem Schichtverbund 12, der die biaxial dehnbare Schicht 14 enthält, werden die teilweise stark unterschiedlichen Dehnungen der Lederhaut einheitlich auf ein Niveau gebracht. Außerdem dient die biaxial dehnbare Schicht 14 als Armierung für eine Perforation des Lederzuschnitts 20.

In einer abgewandelten Ausführungsform ist es auch denkbar, zunächst den Lederzuschnitt 20, insbesondere in seiner Ausgestaltung als perforierter oder geflochtener bzw. gewebter Lederabschnitt 20', wie er nachfolgend beschrieben wird, mit einem textilen Zuschnitt, z.B. durch Überlappen oder Verbinden bzw. Vernähen, zu ergänzen oder alternativ auch zu ersetzen, bevor die Kaschierung erfolgt.

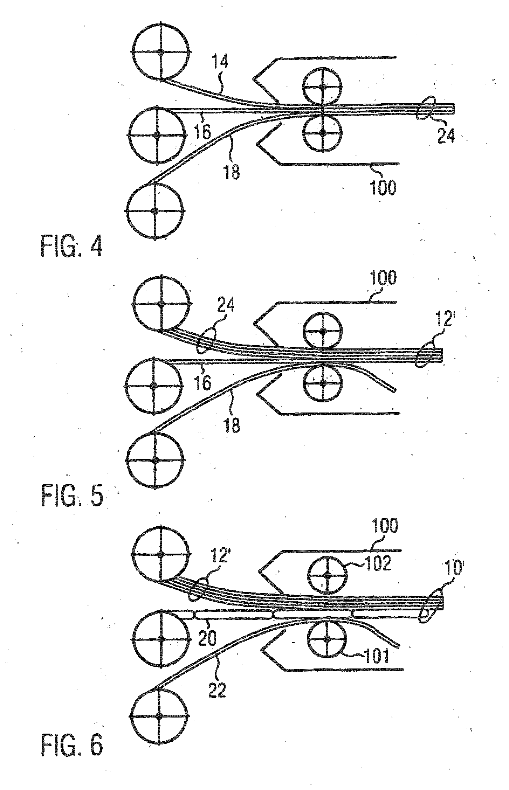

In den Figuren 4 bis 6 ist eine zweite Ausführungsform des Verfahrens zur Herstellung eines Lenkrads mit einem Überzug 10' dargestellt. Im Unterschied zur ersten Ausführungsform wird hier nicht eine biaxial dehnbare Schicht 14 alleine, sondern ein Schichtverbund 24 mit einer biaxial dehnbaren Schicht 14 auf die erste Seite einer Klebeschicht 16 kaschiert.

Figur 4 zeigt die Herstellung dieses Schichtverbunds 24, bei der eine Penetrationssperrschicht 26, insbesondere in Gestalt einer hoch dehnfähigen Polyesterfolie, mit einer ersten Seite unter Verwendung einer thermisch aktivierbaren Klebeschicht 16 auf die biaxial dehnbare Schicht 14 kaschiert wird. Als Klebeschicht kann wiederum ein Co-Polyesterklebeweb verwendet werden.

Die folgenden, in den Figuren 5 und 6 gezeigten Verfahrensschritte entsprechen im Wesentlichen denen der ersten Ausführungsform (vgl. Figuren 2 und 3), wobei die in den Figuren 2 und 3 beschriebene biaxial dehnbare Schicht 14 durch den anhand von Figur 4 beschriebenen Schichtverbund 24, der eine biaxial dehnbare Schicht 14 enthält, ersetzt ist, d. h. der heißsiegelfähige Schichtverbund 12' wird hier durch die Klebeschicht 16 und den Schichtverbund 24 gebildet.

Insbesondere wird zur Herstellung des heißsiegelfähigen Schichtverbunds 12' wird eine thermisch aktivierbare Klebeschicht 16 mit einer ersten Seite auf den Schichtverbund 24 kaschiert. Die Klebeschicht 16 ist vorzugsweise wiederum ein als Bahnware verfügbares Co-Polyesterklebeweb. Bei diesem Vorgang wird auf einer der ersten Seite entgegengesetzten, zweiten Seite der Klebeschicht 16 ein erstes Trennmittel 18, insbesondere ein Silikonpapier, eingesetzt.

Der kaschierte Lederzuschnitt 20, 20' wird dann gegebenenfalls noch zurechtgeschnitten und anschließend so auf einen Lenkradgrundkörper aufgebracht, dass die Vorderseite des Lederzuschnitts 20, 20' nach außen weist.

In einem darauf folgenden Schritt, der in Figur 6 dargestellt ist, wird der heißsiegelfähige Schichtverbund 12' auf die Rückseite eines Lederzuschnitts 20' kaschiert. Dieser Lederzuschnitt 20' unterscheidet sich im Wesentlichen von dem Lederzuschnitt 20, dadurch, dass der Lederzuschnitt 20' keine geschlossene sondern eine offene, also fluid durch lässige Oberfläche aufweist. Diese Oberfläche ist insbesondere als perforierte oder auf andere Weise unter- bzw. aufgebrochene Oberfläche ausgebildet. Auch ist der Lederzuschnitt 20' als Webleder denkbar, bei dem sich einzelne Streifen eines Ledermaterials mit weiteren Streifen aus Leder oder einem textilen Material abwechseln bzw. kreuzen.

Auf der Vorderseite (Sichtseite) des Lederzuschnitts 20' wird dabei ein zweites Trennmittel 22, insbesondere ein nicht gewebtes Material, z.B. Silikonpapier, eingesetzt.

Grundsätzlich ist auch denkbar, die einzelnen Schritte in einen kontinuierlichen Prozeß oder einen gemeinsamen Schritt zusammenzufassen. Als Lederzuschnitt 20, 20' sind einzelne Abschnitte in der bereits zum Aufbringen auf das Lenkrad geeigneten Größe ebenso zu verstehen, wie vorzugsweise ganze oder halbe Lederhäute.

Ein erfindungsgemäß hergestellter Überzug lässt sich auch bei engsten Radien faltenfrei auf einen Lenkradgrundkörper aufbringen. Hierzu werden einzelne auf ihre jeweils für den Überzug 10, 10' geeignete Größte zugeschnittenen Abschnitte des fertig kaschierten Lederzuschnitts 20, 20' untereinander vorvernäht, sodann über den Lenkradkranz 4 oder einzelne Bereiche 5a- 5e hiervon gezogen, und sodann um diese(n) herum fertig vernäht. Ebenso ist eine Aufbringung des Überzugs 10, 10' jeweils gesondert oder gemeinsam auf die Speiche(n) 3 und die Nabe 2 bzw. das Modul 2' vorzunehmen. Sofern, z.B. bei dem Überzug 10, 10' für das Modul Sollbruchstellen vorgesehen werden, sind diese mit einem geeigneten Verfahren, z. B. durch Anritzen, Einkerben oder Einschneiden, nach der Kaschierung und vor dem Aufbringen auf das Modul 2' vorzunehmen.

### Bezuaszeichenliste

- 10, 10': Überzug
- 12, 12': heißsiegelfähiger Schichtverbund
- 14: biaxial dehnbare Schicht
- 16: Klebeschicht
- 18: erstes Trennmittel
- 20, 20': Lederzuschnitt
- 22: zweites Trennmittel
- 24: Schichtverbund mit biaxial dehnbarer Schicht
- 26: Penetrationssperrschicht

## Patentansprüche

1. Verfahren zur Herstellung eines Lenkrads mit einem Überzug (10; 10') mit folgenden Schritten:
- Bereitstellen eines Lederzuschnitts oder einer Lederhaut (20) mit einer Vorderseite und einer Rückseite;
- Bereitstellen eines heißsiegelfähigen Schichtverbunds (12; 12');
- Kaschieren des heißsiegelfähigen Schichtverbunds (12; 12') auf die Rückseite des Lederzuschnitts oder der Lederhaut (20); und
- Aufbringen des Überzugs (10; 10') auf einen Lenkradgrundkörper
**dadurch gekennzeichnet, dass** der heißsiegelfähige Schichtverbund (12; 12') eine biaxial dehnbare Schicht (14) oder einen Schichtverbund (24) mit einer biaxial dehnbaren Schicht (14) aufweist, wobei die biaxial dehnbare Schicht (14) eine biaxial dehnbare Webware umfasst.

2. Verfahren nach Anspruch 1, **dadurch gekennzeichnet, dass** die biaxial dehnbare Webware aus 100 % Polyester besteht und vorzugsweise ein Gewicht von 20 bis 26 g/m², insbesondere ca. 23 g/m², aufweist.

3. Verfahren nach Anspruch 2, **dadurch gekennzeichnet, dass** zum Herstellen des heißsiegelfähigen Schichtverbunds (12; 12') eine Klebeschicht (16) mit einer ersten Seite auf die biaxial dehnbare Schicht (14) bzw. auf den Schichtverbund (24) mit der biaxial dehnbaren Schicht (14) kaschiert wird, wobei vorzugsweise bei der Herstellung des heißsiegelfähigen Schichtverbunds (12; 12') auf einer der ersten Seite entgegengesetzten zweiten Seite der Klebeschicht (16) ein erstes Trennmittel (18), insbesondere ein Silikonpapier, eingesetzt wird.

4. Verfahren nach einem der vorhergehenden Ansprüche, **dadurch gekennzeichnet, dass** beim Kaschieren des heißsiegelfähigen Schichtverbunds (12; 12') auf die Rückseite des Lederzuschnitts (20, 20') auf der Vorderseite des Lederzuschnitts (20, 20') ein zweites Trennmittel (22), insbesondere ein nicht gewebtes Material, eingesetzt wird, und/oder, dass beim Kaschieren des heißsiegelfähigen Schichtverbunds (12; 12') auf die Rückseite des Lederzuschnitts (20, 20') eine Flexowalze verwendet wird, und/oder, dass zum Herstellen des Schichtverbunds (24) mit der biaxial dehnbaren Schicht (14) eine Penetrationssperrschicht (26) mit einer ersten Seite auf die biaxial dehnbare Schicht (14) kaschiert wird, wobei vorzugsweise, insbesondere in einem Folgeschritt, auf einer der ersten Seite entgegengesetzten zweiten Seite der Penetrationssperrschicht (26) eine weitere Klebeschicht (16), insbesondere unter Verwendung eines weiteren Trennmittels (18), kaschiert wird.

5. Lenkrad, insbesondere für ein Kraftfahrzeug, mit einem Lenkradgrundkörper und einem darauf aufgebrachten Überzug (10; 10'), der folgendes aufweist:
- einen Lederzuschnitt (20, 20') mit einer Vorderseite und einer Rückseite; und
- einen auf die Rückseite des Lederzuschnitts (20, 20') kaschierten heißsiegelfähigen Schichtverbund (12; 12'),
**dadurch gekennzeichnet, dass** der heißsiegelfähige Schichtverbund (12; 12') eine biaxial dehnbare Schicht (14) oder einen Schichtverbund (24) mit einer biaxial dehnbaren Schicht (14) aufweist, wobei die biaxial dehnbare Schicht (14) eine biaxial dehnbare Webware umfasst.

6. Lenkrad nach Anspruch 5, **dadurch gekennzeichnet, dass** die biaxial dehnbare Webware aus 100 % Polyester besteht und vorzugsweise ein Gewicht von 20 bis 26 g/m², insbesondere ca. 23 g/m² aufweist.

7. Lenkrad nach Anspruch 5 oder 6, **dadurch gekennzeichnet, dass** der heißsiegelfähige Schichtverbund (12; 12') zumindest eine mit einer ersten Seite auf die biaxial dehnbare Schicht (14) bzw. auf den Schichtverbund (24) mit der biaxial dehnbaren Schicht (14) kaschierte Klebeschicht (16) aufweist, und/oder, dass der Schichtverbund (24) mit der biaxial dehnbaren Schicht (14) eine mit einer ersten Seite auf die biaxial dehnbare Schicht (14) kaschierte Penetrationssperrschicht (26), vorzugsweise in Gestalt einer Polyesterfolie, aufweist.

8. Lenkrad nach Anspruch 7, **dadurch gekennzeichnet, dass** der Schichtverbund (24) mit der biaxial dehnbaren Schicht (14) auf einer der ersten Seite entgegengesetzten zweiten Seite der Penetrationssperrschicht (26) eine weitere Klebeschicht (16) aufweist.

9. Lenkrad nach einem der Ansprüche 5 bis 8, **dadurch gekennzeichnet, dass** der Lederzuschnitt (20, 20') durch ein textiles Material ersetzt oder ergänzt ist, und/oder dass der Überzug (10; 10') durch flächiges Verkleben und Vernähen seiner Ränder auf dem Lenkrad oder Abschnitten hiervon, insbesondere auf zumindest einem, vorzugsweise auf zwei oder auf drei oder auf vier, Winkelsegmenten des Lenkradkranzes und/oder auf Speichen des Lenkrades, dauerhaft befestigt ist.

10. Lenkrad nach einem der Ansprüche 5 bis 8, **dadurch gekennzeichnet, dass** das Lenkrad ein metallisches Skelett aufweist, das zumindest teilweise von einem Schaummaterial umgeben ist, wobei der Überzug (10, 10') zumindest auf einzelne Bereiche (5a-5e) eines Lenkradkranzes, auf Speichen (3) und/oder auf eine Nabe (2) bzw. ein Modul (2') des Lenkrades aufgebracht ist, und wobei vorzugsweise zwischen dem Schaummaterial und dem Überzug (10, 10') eine Heiz- oder Kühleinrichtung angeordnet ist, und/oder ein relativ zum Kern bewegliches Bauteil, insbesondere ein Airbagmodul an dem Skelett und/oder dem Schaummaterial befestigbar bzw. befestigt ist.

## Claims

1. A method of manufacturing a steering wheel including a cover (10; 10') comprising the steps of:
- providing a leather cut or a true skin (20) having a front side and a rear side;
- providing a heat sealable laminar structure (12; 12');
- laminating the heat sealable laminar structure (12; 12') onto the rear side of the leather cut or the true skin (20); and
- applying the cover (10; 10') to a steering wheel base,
**characterized in that** the heat sealable laminar structure (12; 12') includes a biaxially extendable layer (14) or a laminar structure (24) including a biaxially extendable layer (14), wherein the biaxially extendable layer (14) comprises a biaxially extendable woven fabric.

2. The method according to claim 1, **characterized in that** the biaxially extendable woven fabric consists of 100% polyester and preferably has a weight of 20 to 26 g/m², especially approx. 23 g/m².

3. The method according to claim 2, **characterized in that** for manufacturing the heat sealable laminar structure (12; 12') an adhesive layer (16) is laminated with a first side onto the biaxially extendable layer (14) and, resp., onto the laminar structure (24) including the biaxially extendable layer (14), wherein during manufacture of the heat sealable laminar structure (12; 12') preferably a first release agent (18), especially silicone paper, is used on a second side of the adhesive layer (16) opposed to the first side.

4. The method according to any one of the preceding claims, **characterized in that** during laminating the heat sealable laminar structure (12; 12') onto the rear side of the leather cut (20, 20') a second release agent (22), especially a non-woven material, is used on the front side of the leather cut (20, 20'), and/or that during laminating the heat sealable laminar structure (12; 12') onto the rear side of the leather cut (20, 20') a flexo roller is used, and/or that for manufacturing the laminar structure (24) including the biaxially extendable layer (14) a penetration barrier layer (26) is laminated with a first side onto the biaxially extendable layer (14), wherein preferably, especially in a subsequent step, onto a second side of the penetration barrier layer (26) opposed to the first side another adhesive layer (16) is laminated, especially using a further release agent (18).

5. A steering wheel for a vehicle, comprising a steering wheel base and a cover (10; 10') applied thereto which includes the following:
- a leather cut (20, 20') having a front side and a rear side; and
- a heat sealable laminar structure (12; 12') laminated onto the rear side of the leather cut (20, 20'),
**characterized in that** the heat sealable laminar structure (12; 12') comprises a biaxially extendable layer (14) or a laminar structure (24) including a biaxially extendable layer (14), wherein the biaxially extendable layer (14) comprises a biaxially extendable woven fabric.

6. The steering wheel according to claim 5, **characterized in that** the biaxially extendable woven fabric consists of 100% polyester and preferably has a weight of 20 to 26 g/m², especially approx. 23 g/m².

7. The steering wheel according to claim 5 or 6, **characterized in that** the heat sealable laminar structure (12; 12') includes at least one adhesive layer (16) laminated with a first side onto the biaxially extendable layer (14) or, resp., onto the laminar structure (24) including the biaxially extendable layer (14), and/or that the laminar structure (24) including the biaxially extendable layer (14) comprises a penetration barrier layer (26), preferably in the form of a polyester film, laminated with a first side onto the biaxially extendable layer (14).

8. The steering wheel according to claim 7, **characterized in that** the laminar structure (24) including the biaxially extendable layer (14) comprises another adhesive layer (16) on a second side of the penetration barrier layer (26) opposed to the first side.

9. The steering wheel according to any one of the claims 5 to 8, **characterized in that** the leather cut (20, 20') is replaced or supplemented by textile material and/or that the cover (10; 10') is permanently fixed by full-surface gluing and stitching of its edges onto the steering wheel or sections thereof, especially onto at least one, preferably two or three or four, angular segments of the steering wheel rim and/or onto spokes of the steering wheel.

10. The steering wheel according to any one of the claims 5 to 8, **characterized in that** the steering wheel has a metallic skeleton which is surrounded at least partially by foam material, wherein the cover 10, 10' is applied at least to individual areas (5a - 5e) of a steering wheel rim, to spokes (3) and/or to a hub (2) or, resp., a module (2') of the steering wheel, and wherein preferably between the foam material and the cover 10, 10' a heating or cooling means is arranged and/or a component movable relative to the core, especially an airbag module, can be or is fixed to the skeleton and/or to the foam material.

## Revendications

1. Procédé de fabrication d'un volant de direction avec un revêtement (10; 10') comprenant les étapes suivantes:
- Fourniture d'une pièce en cuir ou d'une peau de cuir (20) avec une face avant et une face arrière;
- Fourniture d'une composite thermoscellable (12; 12 ');
- Laminage du composite thermoscellable (12; 12 ') sur l'arrière de la pièce en cuir ou de la peau en cuir (20); et
- Application du revêtement (10; 10 ') sur l'armature du volant de direction
**caractérisé en ce que** le composite thermoscellable (12; 12 ') comprend une couche extensible biaxialement (14) ou un composite (24) avec une couche extensible biaxialement (14), dans lequel la couche extensible biaxialement (14) comprend un tissu tissé extensible biaxialement.

2. Procédé selon la revendication 1, **caractérisé en ce que** le tissu tissé extensible biaxialement se compose de préférence de 100% de polyester, et possède préféremment un poids de 20 à 26g/m², en particulier d'environ 23 g/m².

3. Procédé selon la revendication 2, **caractérisé en ce que** pour produire le composite thermoscellable (12; 12 '), est laminée une couche adhésive (16) avec un premier côté sur la couche extensible biaxialement (14) ou sur le composite (24) avec la couche extensible biaxialement (24), pour lequel de préférence dans la fabrication du composite thermoscellable (12; 12 ') est disposé un premier moyen de séparation (18) sur l'un des premiers côté opposé au second côté de la couche adhésive (16), en particulier un papier de silicone.

4. Procédé selon l'une quelconque des revendications précédentes, **caractérisé en ce que** pendant le laminage du composite thermoscellable (12; 12 ') un second moyen de séparation (22), en particulier un matériau non tissé, est disposé sur la face arrière de la pièce en cuir (20, 20') sur la face avant de la pièce en cuir (20, 20 '), et/ou que, durant le laminage du composite thermoscellable (12; 12 ') un rouleau d'impression Flexo est utilisé à l'arrière de la pièce en cuir (20, 20'), et/ou que, à la fabrication du composite de (24) avec la couche extensible biaxialement (14) est laminée une couche barrière à la pénétration (26) avec un premier côté sur la couche extensible biaxialement(14), dans lequel de préférence, en particulier dans une étape ultérieure, est laminée sur un premier côté à l'opposé à de la deuxième face de la couche barrière à la pénétration (26), une autre couche adhésive (16), en particulier en utilisant un moyen de séparation supplémentaire (18).

5. Volant, en particulier pour un véhicule, avec une armature de volant et un revêtement appliqué sur celui-ci (10; 10'), comprenant:
- Une pièce en cuir (20, 20 ') ayant un côté avant et un côté arrière; et
- Un composite thermoscellable (12; 12') laminé sur la face arrière de la pièce en cuir (20, 20')
**caractérisé en ce que** le composite thermoscellable (12; 12 ') comprend une couche extensible biaxialement (14) ou un composite (24) avec une couche extensible biaxialement (14), dans lequel la couche extensible biaxialement (14) comprend un tissu tissé extensible biaxialement.

6. Volant selon la revendication 5, **caractérisé en ce que** la couche extensible biaxialement (14) comprend un tissu extensible biaxialement, qui se compose de préférence de 100% de polyester, et plus préférablement avec un poids de 20 à 26 g/m², en particulier d'environ 23 g/m².

7. Volant selon la revendication 5 ou 6, **caractérisé en ce que** le composite thermoscellable (12; 12 ') possède au moins une couche adhésive (16) laminée avec un premier côté sur la couche extensible biaxialement (14) ou sur le composite (24) avec couche extensible biaxialement (14), et/ou que le composite de couches (24) avec couche extensible biaxialement (14) possède une couche barrière à la pénétration (26), de préférence sous la forme d'un film de polyester, laminée avec un premier côté sur la couche extensible biaxialement (14).

8. Volant de direction selon la revendication 7, **caractérisé en ce que** le composite (24) avec couche extensible biaxialement (14) possède une autre couche adhésive (16) sur une première face opposée au second côté de la couche barrière à la pénétration (26).

9. Volant selon l'une quelconque des revendications 5 à 8, **caractérisé en ce que** la pièce en cuir (20, 20 ') est remplacée ou complétée par un matériau textile, et/ou que le revêtement (10; 10') est monté de façon permanente en collant à plat et cousant ses bords sur le volant de direction ou les sections de celui-ci, et en particulier au moins une, de préférence deux ou trois ou quatre, segments angulaires de la jante du volant de direction et/ou des branches du volant de direction.

10. Volant selon l'une quelconque des revendications 5 à 8, **caractérisé en ce que** le volant de direction comporte une armature métallique qui est au moins partiellement entourée par un matériau en mousse, dans lequel le revêtement 10, 10' est déposé sur au moins chacune des régions (5a 5e) d'une jante de volant de direction, sur les rayons (3) et/ou sur un moyeu (2) ou plus précisément un module (2 ') du volant de direction, et dans lequel de préférence entre le matériau en mousse et le revêtement 10, 10' est disposé un dispositif de chauffage ou de refroidissement, et/ou peut être fixé ou plus précisément est attaché mobile par rapport au centre un composant, en particulier un module de coussin gonflable sur l'armature et/ou le matériau en mousse.
